# EUROPEAN PATENT SPECIFICATION

(11) **EP 2 873 558 B1**
(45) Date of publication and mention of the grant of the patent: **24.06.2020**
(21) Application number: 14167482.0
(22) Date of filing: 08.05.2014
(51) Int. Cl.: B60P 1/28

(54) **Semi-trailer for transporting goods**
Sattelauflieger zum Transport von Gütern
Semi-remorque pour transporter des marchandises

(30) Priority: 15.11.2013 ES 201331320 U
(43) Date of publication of application: 20.05.2015
(73) Proprietor: Remolques y Volquetes, S.L., 46530 Valencia (ES)
(72) Inventor: Martinez Garces, Juan Luis, 46530 Valencia (ES); Martinez Garces, Isidoro, 46530 Valencia (ES)
(74) Representative: Isern Patentes y Marcas S.L.

(56) References cited:
- WO-A1-82/01689
- GB-A- 2 067 522
- US-A- 2 989 344
- US-A- 3 224 811
- US-A- 5 033 794
- US-A- 5 074 622

## Description

### OBJECT OF THE INVENTION

The present invention can be included in the technical field of freight transport. Specifically, the object of the invention relates to a semi-trailer for freight transport.

### BACKGROUND OF THE INVENTION

The prior art includes semi-trailers comprising a chassis, and further comprising a tipper superimposed on the chassis for the purpose of containing a freight of goods, and a articulated joint located on the rear of the chassis and the tipper to allow the tipper to swivel relative to the chassis. The semi-trailer further includes a telescoping hydraulic cylinder located at the front of the chassis, the cylinder being provided with a first end coupled to the chassis and a second end coupled to the tipper, so the tipper swivels relative to the chassis around the articulated joint.

The chassis usually comprises a pair of longitudinal beams, also called rails, on which the tipper rests, where the rails have a lower height at the front than at the rear.

Generally, there is a coupling pin (also called "king-pin") on the lower part of the chassis, in a position behind the first end of the cylinder, to engage the trailer to a motor vehicle.

During swivelling of the tipper relative to the chassis, whereby the front of the tipper is raised relative to the chassis to dump the load contained in the tipper, the cylinder transmits stress to the chassis rails. Height dimensions of the beams must be high enough to withstand the referred stresses without excessive deformation during swivelling. To this end, the beams must present great dimensions in height, which causes the tipper to be located high above the ground, which affects the stability of the semi-trailer and of the load during transport and swivelling.

It is known from prior art US 2989344-A which discloses a semi-trailer for freight transport whose common parts are part of the preamble in claim 1.

### DESCRIPTION OF THE INVENTION

The present invention relates to a semi-trailer for freight transport, comprising:
- An elongated chassis;
- A tipper supported on the chassis, to contain a freight of goods;
- An articulated joint located on the rear of the chassis and tipper to allow the tipper to swivel relative to the chassis;
- A telescopic cylinder, located on the front of the chassis, and having a first end coupled to the chassis and a second end coupled to the tipper, to make the tipper swivel relative to the chassis around the articulated joint; and
- A coupling pin (also called king-pin) located on the bottom front of the chassis to engage the chassis to a motor vehicle that is not part of the invention.

The semi-trailer further includes a first fixation, to couple the first end of the cylinder to the chassis, and a second fixation, to couple the second end of the cylinder to the tipper.

The semi-trailer according to the present invention is characterized in that the first fixation is located on the coupling pin, such that, in vertical projection, the first fixation is spaced from the coupling pin by a distance that is substantially zero, so that, in vertical projection, the second fixation occupies a superposed position with regard to the coupling pin.

The described configuration, during the swivelling of the tipper, whereby the front of the tipper is raised relative to the chassis, allows at least a part of the stress generated by the weight of the tipper and of the freight of goods contained in the tipper, to be transmitted by the cylinder to the coupling pin and, therefore, towards the motor vehicle, whereby the stresses on the chassis are significantly reduced, to a greater degree the smaller the distance between the first fixation and the coupling pin in vertical projection.

As a result of the above, the chassis height dimensions allowing permissible deformation can be reduced, which causes a decrease in the height at which the bottom of the tipper rests, also called floor, thereby lowering the centre of gravity of the tipper, thus providing greater stability during transport of the semi-trailer by the motor vehicle and during the swivelling of the tipper. The reduction of the height of the centre of gravity is even greater if using a semi-trailer equipped with a chassis called gooseneck chassis or lowered chassis or two-level chassis.

### DESCRIPTION OF THE DRAWINGS

To complement the description being made and in order to aid a better understanding of the characteristics of the invention according to a preferred practical embodiment thereof, a set of drawings is included as an integral part of said description, wherein by way of illustration and not limiting the scope of the invention, the following is shown:
Figure 1 - Shows a side view of a semi-trailer according to the invention, wherein the tipper is in a raised position relative to the chassis, and a detail of the first fixation between the cylinder and the chassis is shown.
Figure 2 - Shows a detailed side view of the front of the semi-trailer of Figure 1, with the tipper in a horizontal position.
Figure 3 - Shows an enlarged sectional view along the line A-A shown in Figure 2.
Figure 4 - Shows a front perspective view corresponding to the side view shown in Figure 2.
Figure 5 - Shows a detail of the first end of a cylinder according to a first preferred embodiment shown in Figures 1 to 3.
Figures 6a and 6b - Show a second preferred embodiment, wherein Figure 6a shows a detail of the first end of the cylinder and Figure 6b shows a detail of the first fixation.
Figures 7a and 7b - Show a third preferred embodiment, wherein Figure 7a shows a detail of the first end of the cylinder and Figure 7b shows a detail of the first fixation.
Figure 8 - Shows a perspective view of the first end of the cylinder according to a fourth preferred embodiment.

### PREFERRED EMBODIMENT OF THE INVENTION

Hereunder a detailed description of a preferred embodiment of the invention is provided, with the support of the aforementioned enclosed figures.

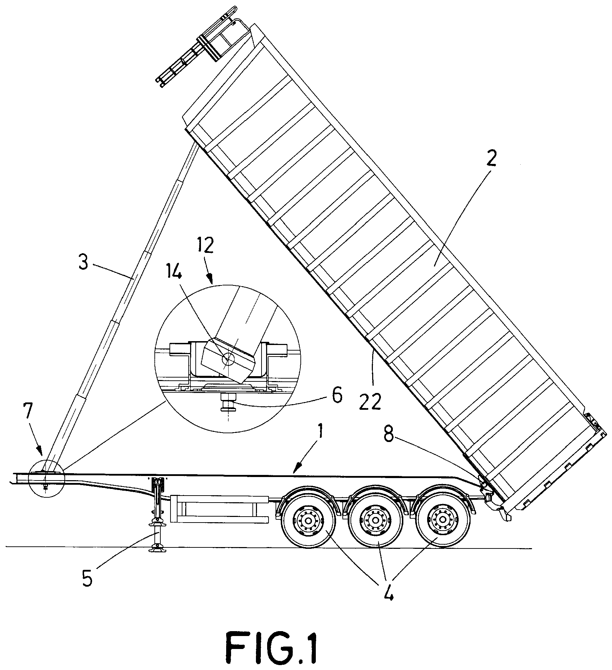

The semi-trailer for freight transport of the present invention comprises an elongated chassis (1) which in turn comprises two spaced apart rails (10), in the manner of longitudinal beams, which run from the front to the rear of the chassis (1). As shown in Figure 1, the front of the rails (10) present a lower height than the rear part. A tipper (2) rests on the rails (10), which is intended to carry a freight of goods. In a rear area of the tipper (2) and of the chassis (1) there is an articulated joint (8) allowing the tipper (2) to swivel relative to the chassis (1), so that the front of the tipper (2) rises relative to the chassis (1).

Located on a bottom front part of the chassis (1) there is a coupling pin (6) so that the semi-trailer can be hitched to a motor vehicle (not shown).

The semi-trailer further comprises a hydraulic telescoping cylinder (3), located on the front of the chassis (1), and which is provided with a first end (7) coupled to the chassis (1) and a second end (9) coupled to the tipper (2), to make the tipper (2) swivel with respect to the chassis (1).

The semi-trailer further includes a first fixation (12) for coupling the first end (7) of the cylinder (3) to the chassis (1) and a second fixation (13), for linking the second end (9) of the cylinder (3) to the tipper (2).

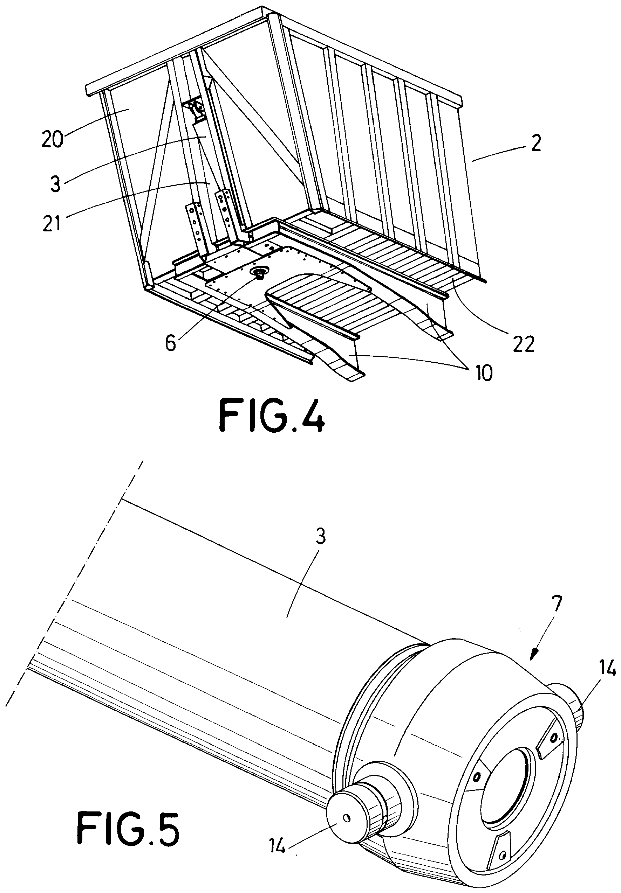

Also, as shown in Figure 4, the tipper (2) has a parallelepipedical shape and comprises a front wall (20), a rear wall, two side walls and a floor (22). The front wall (20) incorporates a recess (21) to house the cylinder (3), wherein the recess (21) originates from the floor (22) and reaches a predetermined height, at which the second fixation (13) is found.

The chassis (1) incorporates a plurality of wheel axles where the corresponding wheels (4) are located to allow a rolling movement of the semi-trailer. Likewise, the chassis (1) also includes a support system equipped with a swivel support (5) to maintain the trailer in a horizontal position when not attached to the motor vehicle by means of the coupling pin (6).

Advantageously, the first end (7) of the cylinder (3) is connected to the chassis (1) above the coupling pin (6), in a position which lies on a vertical axis (V) of the coupling pin (6).

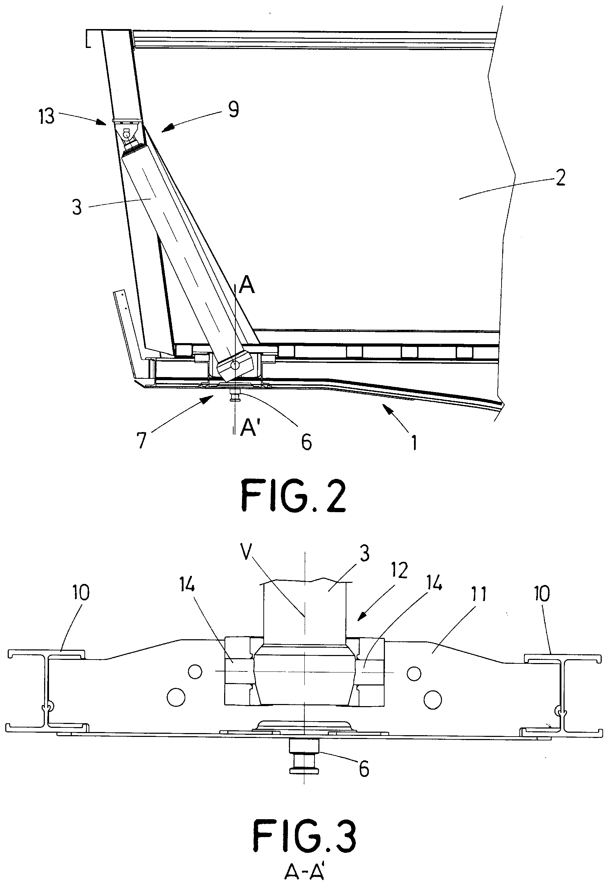

In the embodiment shown in the figures, the rails (10) comprised within the chassis (1) run parallel. Alternatively, the rails (10) may be convergent from the front to the rear, divergent from the front to the rear, or in general, oriented according to another spatial relationship between them. The chassis (1) further comprises a structural element (11) on which the first fixation (12) is located to couple the first end (7) of the cylinder (3) to the chassis (1). In the embodiment shown in the figures, see in particular Figures 3, 6b and 7b, the structural element (11) connects the rails (10) in the manner of a bridge.

Examples of different constructive solutions to pivotally couple the first end (7) of the cylinder (3) to the chassis (1) are shown in the Figures. In particular, according to a first embodiment, shown in Figures 1-3 and 5, the first end (7) of the cylinder (3) incorporates at least one rod (14) secured to said first end (7) and protruding from said first end (7), and designed to fit into the first fixation (12). In said Figures 1-3 and 5 two rods (14) are depicted.

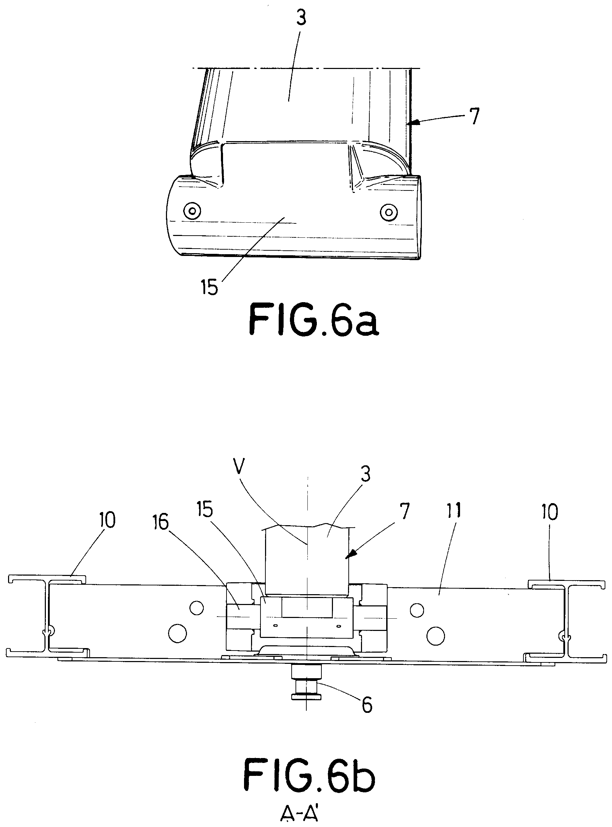

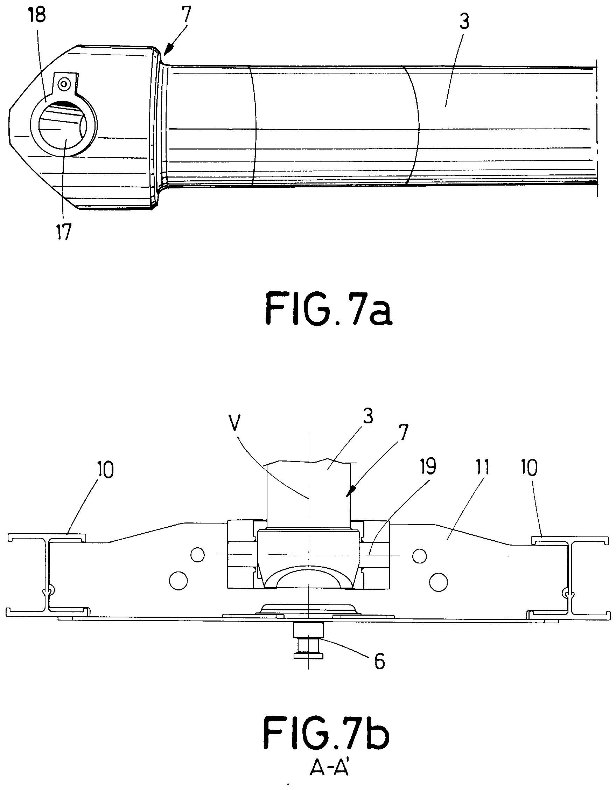

According to alternative embodiments, shown in 6a, 6b, 7a, 7b and 8, bolts (16, 19) that are not part of the cylinder (3) are used. In particular, Figures 6a and 6b show a first bushing (15) secured to the first end (7) in extension of the cylinder (3), intended to house a first bolt (16) to be connected to the first fixation (12). Moreover, Figures 7a and 7b illustrate a bore (17) drilled in the first end (7) and a second bushing (18) in extension of the bore (19) to house a second bolt (19).

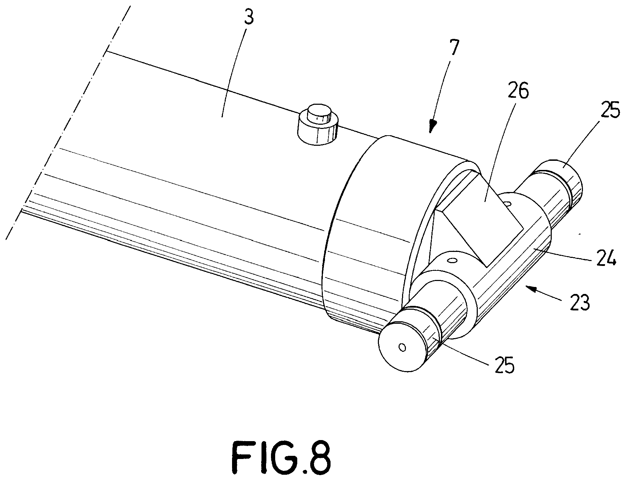

Similarly, Figure 8 illustrates an alternative embodiment wherein there is a third bolt (23) comprising: a central portion (24) of larger diameter, and respective lateral portions (25) of smaller diameter, located on both sides of the central portion (24) to be pivotally coupled to the first fixation (12), wherein the central portion (24) is integrally attached to the first end (7) of the cylinder (3). The example illustrated by Figure 8 shows that the central portion (24) is welded to a coupling piece (26) which in turn is also welded to the first end (7) of the cylinder (3).

Due to the characteristics explained, the semi-trailer object of the present invention comprises rails (10) whose height dimensions are smaller than those known in the referred prior art.

As a result of the reduction in height performed in the rails (10), the height at which the coupling pin (6) of the chassis (1) is hitched to the motor vehicle is also reduced and consequently also the height at which the floor (22) of the tipper (2) rests on the rails (10), whereby the centre of gravity of the tipper (2) is decreased, therefore improving the stability of said tipper (2), both during transport of the semi-trailer by the motor vehicle and also during the swivelling of the tipper (2) relative to the chassis (1).

## Claims

1. Semi-trailer for freight transport, comprising:
- an elongated chassis (1);
- a tipper (2) supported on the chassis (1), to contain a freight of goods;
- an articulated joint (8) located in a rear region of the chassis (1) and of the tipper (2), to allow the tipper (2) to swivel relative to the chassis (1);
- a telescoping cylinder (3), located at the front of the chassis (1), and having a first end (7) coupled to the chassis (1) and a second end (9) coupled to the tipper (2) to swivel the tipper (2) relative to the chassis (1) around the articulated joint (8);
- a first fixation (12) to connect the first end (7) of the cylinder (3) to the chassis (1);
- a second fixation (13), to connect the second end (9) of the cylinder (3) to the tipper (2); and
- a coupling pin (6) located at a bottom front part of the chassis (1), to hitch the chassis (1) to a motor vehicle,
wherein the first end of the chassis (1) is located above the coupling pin (6), **characterized in that** a vertical axis (V) of the coupling pin (6) is separated apart from the first fixation (12), in horizontal projection, by a distance that is substantially zero, so that the first fixation (12) coincides, in vertical projection, with the vertical axis (V)

2. Semi-trailer for freight transport, according to claim 1, **characterized in that** the chassis (1) comprises:
- two longitudinal rails (10), in the manner of beams, on which the tipper (2) rests; and
- a structural element (11) on which the first fixation (12) is located.

3. Semi-trailer for freight transport, according to claim 2, **characterized in that** the rails (10) are parallel.

4. Semi-trailer for freight transport, according to claim 2, **characterized in that** the rails (10) are not parallel.

5. Semi-trailer for freight transport, according to claim 2, **characterized in that** the structural element (11) connects the rails (10) in the manner of a bridge.

6. Semi-trailer for freight transport, according to any one of the preceding claims, **characterized in that** the tipper (2) is parallelepipedic and comprises:
- a front wall (20),
- a rear wall,
- side walls,
- a floor (22), and
- a recess (21) formed in the front wall (20) to house the cylinder (3),wherein the recess (21) originates from the floor (22) and reaches a predetermined height, at which the second fixation (13) is located.

7. Semi-trailer for freight transport, according to any one of claims 1-6, **characterized in that** it further includes a rod (14) integrally fixed onto and protruding from the first end (7) of the cylinder (3), and designed to fit into the first fixation (12) to provide a hinged connection between the cylinder (3) and the chassis (1).

8. Semi-trailer for freight transport, according to any one of claims 1-6, **characterized by** further incorporating:
- a first bushing (15) secured to the first end (7) in extension of the cylinder (3); and
- a first bolt (16) housed in the first bushing (15) and designed to fit into the first fixation (12) to provide a hinged connection between the cylinder (3) and the chassis (1).

9. Semi-trailer for freight transport, according to any one of claims 1-6, **characterized in that** it further includes:
- a bore (17) drilled in the first end (7);
- a second bushing (18) in extension of the bore (17); and
- a second bolt (19) housed in the bore (17) and designed to fit into the first fixation (12) to provide a hinged connection between the cylinder (3) and the chassis (1).

10. Semi-trailer for freight transport, according to any one of claims 1-6, **characterized in that** it further incorporates:
- a third bolt (23), comprising in turn:
- a central portion (24) of larger diameter, integrally fixed to the first end (7) of the cylinder (3); and
- two side portions (25) of smaller diameter, located on both sides of the central portion (24) to pivotally couple to the first fixation (12).

11. Semi-trailer for freight transport, according to claim 10, **characterized by** further comprising a coupling piece (26) which is welded to the first end (7) of the cylinder (3) and to the central portion (24) of the third bolt (23) to integrally fix the third bolt (23) to the first end (7) of the cylinder (3).

## Patentansprüche

1. Sattelauflieger für den Gütertransport, umfassend:
- ein längliches Fahrgestell (1);
- eine Kippvorrichtung (2) zum Enthalten von Gütern, die auf dem Fahrgestell (1) aufliegt;
- eine Gelenkverbindung (8), die sich in einem hinteren Bereich des Fahrgestells (1) und der Kippvorrichtung (2) befindet, um ein Schwenken der Kippvorrichtung (2) in Bezug zu dem Fahrgestell (1) zu ermöglichen;
- einen Teleskopzylinder (3), der sich an der Vorderseite des Fahrgestells (1) befindet und ein erstes Ende (7), das mit dem Fahrgestell (1) gekuppelt ist, und ein zweites Ende (9) hat, das mit der Kippvorrichtung (2) gekuppelt ist, um die Kippvorrichtung (2) in Bezug zu dem Fahrgestell (1) um die Gelenkverbindung (8) zu schwenken;
- eine erste Befestigung (12), um das erste Ende (7) des Zylinders (3) mit dem Fahrgestell (1) zu verbinden;
- eine zweite Befestigung (13), um das zweite Ende (9) des Zylinders (3) mit der Kippvorrichtung (2) zu verbinden; und
- einen Kupplungsbolzen (6), der sich an einem vorderen Teil der Unterseite des Fahrgestells (1) befindet, um das Fahrgestell (1) an ein Kraftfahrzeug anzuhängen,
wobei sich das erste Ende des Fahrgestells (1) über dem Kupplungsbolzen (6) befindet, **dadurch gekennzeichnet, dass** eine Vertikalachse (V) des Kupplungsbolzens (6) von der ersten Befestigung (12) in horizontaler Projektion um einen Abstand getrennt ist, der im Wesentlichen Null ist, sodass die erste Befestigung (12) in vertikaler Projektion mit der Vertikalachse (V) übereinstimmt.

2. Sattelauflieger für den Gütertransport nach Anspruch 1, **dadurch gekennzeichnet, dass** das Fahrgestell (1) Folgendes umfasst:
- zwei Längsschienen (10) in der Art von Trägern, auf denen die Kippvorrichtung (2) ruht; und
- ein Strukturelement (11), an dem sich die erste Befestigung (12) befindet.

3. Sattelauflieger für den Gütertransport nach Anspruch 2, **dadurch gekennzeichnet, dass** die Schienen (10) parallel sind.

4. Sattelauflieger für den Gütertransport nach Anspruch 2, **dadurch gekennzeichnet, dass** die Schienen (10) nicht parallel sind.

5. Sattelauflieger für den Gütertransport nach Anspruch 2, **dadurch gekennzeichnet, dass** das Strukturelement (11) die Schienen (10) in der Art einer Brücke verbindet.

6. Sattelauflieger für den Gütertransport nach einem der vorhergehenden Ansprüche, **dadurch gekennzeichnet, dass** die Kippvorrichtung (2) quaderförmig ist und Folgendes umfasst:
- eine Vorderwand (20),
- eine Rückwand,
- Seitenwände,
- einen Boden (22) und
- eine Aussparung (21), die in der Vorderwand (20) ausgebildet ist, um den Zylinder (3) aufzunehmen, wobei die Aussparung (21) von dem Boden (22) ausgeht und eine vorbestimmte Höhe erreicht, an der sich die zweite Befestigung (13) befindet.

7. Sattelauflieger für den Gütertransport nach einem der Ansprüche 1 bis 6, **dadurch gekennzeichnet, dass** er ferner einen Stab (14) umfasst, der integral an dem ersten Ende (7) des Zylinders (3) befestigt ist und von diesem vorsteht, und so ausgelegt ist, dass er in die erste Befestigung (12) passt, um eine gelenkige Verbindung zwischen dem Zylinder (3) und dem Fahrgestell (1) bereitzustellen.

8. Sattelauflieger für den Gütertransport nach einem der Ansprüche 1 bis 6, **dadurch gekennzeichnet, dass** er ferner Folgendes integriert:
- eine erste Buchse (15), die an dem ersten Ende (7) in Verlängerung des Zylinders (3) befestigt ist; und
- einen ersten Bolzen (16), der in der ersten Buchse (15) aufgenommen ist und so ausgelegt ist, dass er in die erste Befestigung (12) passt, um eine gelenkige Verbindung zwischen dem Zylinder (3) und dem Fahrgestell (1) bereitzustellen.

9. Sattelauflieger für den Gütertransport nach einem der Ansprüche 1 bis 6, **dadurch gekennzeichnet, dass** er ferner Folgendes einschließt:
- eine Bohrung (17), die in das erste Ende (7) gebohrt ist;
- eine zweite Buchse (18) in Verlängerung der Bohrung (17); und
- einen zweiten Bolzen (19), der in der Bohrung (17) aufgenommen ist und so ausgelegt ist, dass er in die erste Befestigung (12) passt, um eine gelenkige Verbindung zwischen dem Zylinder (3) und dem Fahrgestell (1) bereitzustellen.

10. Sattelauflieger für den Gütertransport nach einem der Ansprüche 1 bis 6, **dadurch gekennzeichnet, dass** er ferner Folgendes integriert:
- einen dritten Bolzen (23), der wiederum Folgendes umfasst:
- einen zentralen Abschnitt (24) größeren Durchmessers, der integral an dem ersten Ende (7) des Zylinders (3) befestigt ist; und
- zwei seitliche Abschnitte (25) kleineren Durchmessers, die sich an beiden Seiten des zentralen Abschnitts (24) befinden, um schwenkbar mit der ersten Befestigung (12) gekuppelt zu sein.

11. Sattelauflieger für den Gütertransport nach Anspruch 10, **dadurch gekennzeichnet, dass** er ferner ein Kupplungsstück (26) umfasst, das an das erste Ende (7) des Zylinders (3) und an den zentralen Abschnitt (24) des dritten Bolzens (23) geschweißt ist, um den dritten Bolzen (23) integral an dem ersten Ende (7) des Zylinders (3) zu befestigen.

## Revendications

1. Semi-remorque pour le transport de fret, comprenant :
- un châssis allongé (1) ;
- une benne basculante (2) supportée sur le châssis (1), pour contenir un fret de marchandises ;
- un joint articulé (8) situé dans une zone arrière du châssis (1) et de la benne basculante (2), pour permettre à la benne basculante (2) de pivoter par rapport au châssis (1) ;
- un vérin télescopique (3), situé à l'avant du châssis (1), et ayant une première extrémité (7) couplée au châssis (1) et une deuxième extrémité (9) couplée à la benne basculante (2) pour faire pivoter la benne basculante (2) par rapport au châssis (1) autour du joint articulé (8) ;
- une première fixation (12) pour raccorder la première extrémité (7) du vérin (3) au châssis (1) ;
- une deuxième fixation (13), pour raccorder la deuxième extrémité (9) du vérin (3) à la benne basculante (2) ; et
- une goupille de couplage (6) située dans une partie avant inférieure du châssis (1), pour atteler le châssis (1) à un véhicule automobile,
dans laquelle la première extrémité du châssis (1) est située au-dessus de la goupille de couplage (6), **caractérisé en ce qu'**un axe vertical (V) de la goupille de couplage (6) est séparé de la première fixation (12), en projection horizontale, d'une distance qui est sensiblement nulle, de sorte que la première fixation (12) coïncide, en projection verticale, avec l'axe vertical (V).

2. Semi-remorque pour le transport de fret, selon la revendication 1, **caractérisée en ce que** le châssis (1) comprend :
- deux rails longitudinaux (10), à la manière de poutres, sur lesquels repose la benne basculante (2) ; et
- un élément structurel (11) sur lequel est située la première fixation (12).

3. Semi-remorque pour le transport de fret, selon la revendication 2, **caractérisée en ce que** les rails (10) sont parallèles.

4. Semi-remorque pour le transport de fret, selon la revendication 2, **caractérisée en ce que** les rails (10) ne sont pas parallèles.

5. Semi-remorque pour le transport de fret, selon la revendication 2, **caractérisée en ce que** l'élément structurel (11) raccorde les rails (10) à la manière d'un pont.

6. Semi-remorque pour le transport de fret, selon l'une quelconque des revendications précédentes, **caractérisée en ce que** la benne basculante (2) est parallélépipédique et comprend :
- une paroi avant (20),
- une paroi arrière,
- des parois latérales,
- un étage (22), et
- un renfoncement (21) formé dans la paroi avant (20) pour loger le vérin (3), dans laquelle le renfoncement (21) émane du plancher (22) et atteint une hauteur prédéterminée, où est située la deuxième fixation (13).

7. Semi-remorque pour le transport de fret, selon l'une quelconque des revendications 1-6, **caractérisée en ce qu'**elle comporte en outre une tige (14) fixée de façon solidaire sur et faisant saillie de la première extrémité (7) du vérin (3), et conçue pour s'insérer dans la première fixation (12) pour fournir un raccordement articulé entre le vérin (3) et le châssis (1).

8. Semi-remorque pour le transport de fret, selon l'une quelconque des revendications 1-6, **caractérisée en ce qu'**elle incorpore en outre :
- une première bague (15) serrée à la première extrémité (7) dans le prolongement du vérin (3) ; et
- un premier boulon (16) logé dans la première bague (15) et conçu pour s'insérer dans la première fixation (12) pour fournir un raccordement articulé entre le vérin (3) et le châssis (1).

9. Semi-remorque pour le transport de fret, selon l'une quelconque des revendications 1-6, **caractérisée en ce qu'**elle comporte en outre :
- un alésage (17) percé dans la première extrémité (7) ;
- une deuxième bague (18) dans le prolongement de l'alésage (17) ;
- et un deuxième boulon (19) logé dans l'alésage (17) et conçu pour s'insérer dans la première fixation (12) pour fournir un raccordement articulé entre le vérin (3) et le châssis (1).

10. Semi-remorque pour le transport de fret, selon l'une quelconque des revendications 1-6, **caractérisée en ce qu'**elle incorpore en outre :
- un troisième boulon (23), comprenant à son tour :
- une portion centrale (24) de plus grand diamètre, fixée de façon solidaire à la première extrémité (7) du vérin (3) ; et
- deux portions latérales (25) de plus petit diamètre, situées des deux côtés de la portion centrale (24) pour se coupler de manière pivotante à la première fixation (12).

11. Semi-remorque pour le transport de fret, selon la revendication 10, **caractérisée en ce qu'**elle comprend en outre une pièce de couplage (26) qui est soudée à la première extrémité (7) du vérin (3) et à la portion centrale (24) du troisième boulon (23) pour fixer de façon solidaire le troisième boulon (23) à la première extrémité (7) du vérin (3).
